# EUROPÄISCHE PATENTSCHRIFT

(11) **EP 2 803 591 B1**
(45) Veröffentlichungstag und Bekanntmachung des Hinweises auf die Patenterteilung: **20.01.2016**
(21) Anmeldenummer: 14001616.3
(22) Anmeldetag: 08.05.2014
(51) Int. Cl.: B65B 29/10, C08L 95/00

(54) **System und Verfahren zur Herstellung von Heißasphalt**
System and method for the preparation of hot asphalt
Système et procédé de fabrication d'asphalte chaud

(30) Priorität: 14.05.2013 DE 102013008131; 14.05.2013 DE 202013004436 U
(43) Veröffentlichungstag der Anmeldung: 19.11.2014
(73) Patentinhaber: ABH Asphalt und Baustoffhandelsgesellschaft mbH, 27383 Scheeßel (DE)
(72) Erfinder:
(74) Vertreter: Hecht, Jan-David

(56) Entgegenhaltungen:
- WO-A1-94/16951
- US-A- 4 073 760

## Beschreibung

Die vorliegende Erfindung betrifft ein System zur Herstellung von Heißasphalt nach dem Oberbegriff von Anspruch 1 und ein Verfahren zur Herstellung eines Heißasphalts nach dem Oberbegriff von Anspruch 10.

Asphalt ist ein Gemisch aus Sand, Gesteinen, Gesteinsmehl und Bitumen. Weiterhin kann es mit anderen Stoffen und Additiven versetzt werden, die dem Asphalt besondere Eigenschaften verleihen. Der Baustoff Asphalt wird in Asphaltmischanlagen bei einer Temperatur zwischen 140 °C bis 300 °C hergestellt. Dieser Produktionsprozess ist sehr energieaufwendig und wird nur bei Temperaturen oberhalb des Gefrierpunktes durchgeführt. Da der Straßenbau in den Wintermonaten generell zum Erliegen kommt, sind auch die Asphaltmischanlagen außer Betrieb und befinden sich in den Monaten Januar bis März in der jährlichen Generalüberholung.

Asphalt kommt vor allem im Straßenbau zum Einsatz, wo er für Fahrbahnbefestigungen dient, aber auch im Hochbau für Bodenbeläge und im Wasserbau wo er zur Abdichtung verwendet wird. Im Straßenbau wird der Asphalt im Rahmen eines mehrschichtigen Aufbaues der Straßenbeläge eingesetzt, wobei er häufig als Deckschicht dient.

Durch Alterung des Bitumens, hohe Verkehrsbelastung oder Einbaufehler, sowohl der Schotter-, als auch der fertigen Asphaltschicht, kann es zu Rissen im Asphalt kommen. Gerade in den Wintermonaten, wenn diese Risse mit Wasser gefüllt sind, dehnt sich bei Temperaturen unterhalb des Gefrierpunktes das Eis um ca. 10% aus. Häufige Frost-Tauwechsel führen zwangsläufig zu chemischer und physikalischer Verwitterung und letztendlich zur Vergrößerung und zum Aufsprengen der Risse. Derartige Mechanismen sind die Ursache für die Entstehung von Schlaglöchern.

Bund, Land und Kommune, die Straßenbaulastträger also, in deren Eigentum sich die jeweiligen Straßen befinden, sind gesetzlich verpflichtet, den Zustand der Straßen so herzustellen und zu unterhalten, dass sie den Erfordernissen der öffentlichen Sicherheit und Ordnung, insbesondere den anerkannten Regeln der Baukunst und der Technik genügen.

Treten nun in den Wintermonaten vermehrt Schlaglöcher auf, die die Befahrbarkeit beeinträchtigen und Schäden am Fahrzeug verursachen könnten, sind die jeweiligen Straßenbaulastträger zum Handeln verpflichtet. Da die Asphaltmischanlagen nicht geöffnet sind, werden entstandene Schlaglöcher heutzutage vor allem mit einem so genannten Kaltasphalt verschlossen, also einem Asphaltmischgut, das im kalten Zustand fertig verarbeitet und in 25 kg Einheiten in das Schlagloch geschüttet, eingebaut werden kann. Um die Verarbeitbarkeit zu gewährleisten, enthalten viele Kaltasphalte Lösungsmittel, die sich nach Einbringung des Kaltasphaltmischgutes in das Schlagloch verflüchtigen. Der Kaltasphalt wird dadurch fest und kann überrollt werden.

Nachteilig bei diesem Verfahren ist zum einen die mangelhafte Umweltverträglichkeit aufgrund der Lösungsmittel. Sollen Kaltasphaltprodukte ohne den Zusatz von Lösungsmitteln verwendet werden, spricht das Kostenargument dagegen, denn solche Produkte liegen pro Tonne über 1.000,- EUR. Das wesentliche Argument, das gegen den Einsatz von Kaltasphalten spricht, ist die durchschnittliche Lebensdauer solchermaßen reparierter Schlaglöcher von nur ca. drei bis vier Monaten. Dies liegt daran, dass solche in Schlaglöchern abgebundene Kaltasphalte weder die elastischdynamischen Eigenschaften aufweisen, wie abgebundene Heißasphalte, noch damit der Abschluss der Nahtstelle zwischen Kaltasphalt und Schlaglochrand so dicht gelingt wie bei Heißasphalten.

Aufgabe der vorliegenden Erfindung ist es, hier Abhilfe zu schaffen. Insbesondere soll mit der vorliegenden Erfindung ein Heißasphalt bereitgestellt werden, der in kleineren Mengen herstellbar und kurzfristig verfügbar, umweltfreundlich und vor allem langlebig ist.

Diese Aufgabe wird gelöst mit einem System zur Herstellung von Heißasphalt nach Anspruch 1 und einem Verfahren zur Herstellung von Heißasphalt nach Anspruch 10. Vorteilhafte Weiterbildungen sind in den abhängigen Ansprüchen angegeben.

Erfindungsgemäß wurde erkannt, dass sich diese Aufgabe überraschenderweise dadurch lösen lässt, dass vorgefertigte Systeme, insbesondere Verpackungseinheiten verwendet werden, in denen ein Feststoffmaterial getrennt von dem Bindemittel bereitgestellt wird. Dann lassen sich in Abhängigkeit von der benötigten Heißasphaltmenge entsprechende System- bzw. Verpackungseinheitsgrößen bereitstellen bzw. es wird eine bestimmte Vielzahl normierter Größen, insbesondere Verpackungseinheitsgrößen verwendet.

"System" bedeutet in diesem Zusammenhang, dass das Feststoffmaterial und das Bindemittel zusammengehörig vorliegen. Dabei muss aber keine gemeinsame Anordnung in einer einheitlichen "Verpackungseinheit" vorliegen, dies könnte allerdings der Fall sein. Stattdessen kann bei dem System aber auch eine räumlich getrennte Anordnung von Feststoffmaterial und Bindemittel vorliegen. "Trennung" umfasst also im Rahmen der vorliegenden Erfindung sowohl eine räumliche Trennung als auch eine Materialtrennung unter Verwendung eines Trennmaterials.

Es wird somit erfindungsgemäß ein System, insbesondere eine Verpackungseinheit zur Herstellung von Heißasphalt bereit gestellt, umfassend ein Feststoffmaterial und ein Bindemittel, das sich dadurch auszeichnet, dass zwischen Bindemittel und Feststoffmaterial eine Trennung vorgesehen ist, wobei das Bindemittel bevorzugt in zumindest einer das Bindemittel von dem Feststoffmaterial trennenden Hülle angeordnet ist. Dabei weist das System, insbesondere die Verpackungseinheit Feststoffmaterial und Bindemittel insbesondere in solchen Gewichtsmengen auf, dass Heißasphalt einer vorbestimmten Zusammensetzung (Rezeptur) hergestellt werden kann. Dann kann der Heißasphalt vor Ort problemlos in Einheiten der verwendeten System- bzw. Verpackungsgröße hergestellt werden, ohne dass weitere Materialabmessungen erforderlich werden.

Falls die Verpackungseinheit eine größere Masse aufweist, werden vorzugsweise mehrere Bindemittelpacken der Verpackungseinheit zugegeben, um das Aufschmelzen zu beschleunigen. Vorteilhaft sind Bindemittelpacken von ca. 1,5 kg vorgesehen.

Zweckmäßig weist das Bindemittel eine Bitumenbasis auf.

Besonders bevorzugt ist das Bindemittel in einer Kunststoffhülle eingeschweißt, wobei die Kunststoffhülle bevorzugt Polyethylen umfasst. Durch das Einschweißen wird ein Kontakt des Bindemittels mit dem Feststoffmaterial auch unter widrigen Transportbedingungen des Systems bzw. der Verpackungseinheit wirksam und dauerhaft verhindert. Natürlich können solche Kunststoffhüllen auch nichteingeschweißt verwendet werden, beispielsweise verknotet und dgl.

Eine alternative Ausgestaltung besteht darin, dass das Bindemittel in einer Verpackung aus Karton oder dgl. angeordnet ist, und zwar bevorzugt in voneinander getrennt angeordneten Portionsquadern einheitlicher Größe, wobei natürlich auch andere Geometrien verwendet werden können. Die Trennung könnte durch einzelne Fächer erzeugt werden, wobei das Verpackungsmaterial insbesondere mit einer Beschichtung zur leichten Entnehmbarkeit der Portionsquader versehen sein könnte.

Dann kann diese Verpackung unabhängig vom Feststoffmaterial verkauft werden und im Fall der Herstellung des Asphalts verwendet man eine bestimmte Menge Feststoffmaterial, die einer entsprechenden anderen Verpackung zu entnehmen ist, und eine zugehörige Menge Bindemittel, die der Bindemittelverpackung zu entnehmen ist, und mischt diese beiden.

Hierbei liegen somit zwei unabhängig von einander verkäufliche Verpackungseinheiten für Feststoffmaterial und Bindemittel vor, somit per Definition das erfindungsgemäße "System". Natürlich kann diese Bindemittelverpackung auch zusammen mit dem Feststoffmaterial als einheitliche "Verpackungseinheit" angeboten werden.

Besonders vorteilhaft enthält das Bindemittel Zusätze bspw. in Form von Additiven, nämlich insbesondere solche, die die Eigenschaften des Ausgangsproduktes Heißasphalt und die Eigenschaften seines mechanischen Einbauens merklich und nachhaltig verbessern. Als Eigenschaften verbessernd kann eine besondere Klebkraft, Haftverbesserung zwischen Gestein und Bitumen, eine Einbauerleichterung sowie eine Absenkung der Verarbeitungstemperatur angesehen werden. Hierzu sind vor allem wachshaltige Additive geeignet. Alternativ oder zusätzlich können auch andere Additive, wie Haftverbesserer oder Verarbeitungsverbesserer, wie asphamin^{®} eingesetzt werden.

Weitere Zusätze können für das Feststoffmaterial oder das Bindemittel vorgesehen sein, beispielsweise Mineralfasern, wie Glasfasern, oder andere Fasern, die als Stabilisatoren die Tragfähigkeit nachhaltig verbessern.

In einer äußerst vorteilhaften Ausgestaltung weist das Bindemittel ein Bitumen, beispielsweise ein kommerziell erhältliches Bitumen 25/55-55, auf und zumindest ein Additiv, beispielsweise ein wachshaltiges Additiv, wobei das Bitumen einen Gewichtsanteil von vorzugsweise 93,5 M.-% bis 99,5 M.-%, bevorzugt 95 M.-% bis 98 M.-%, insbesondere 96,5 M.-% aufweist und das Additiv einen Gewichtsanteil von vorzugsweise 0,5 M.-% bis 6,5 M.-%, bevorzugt, 2 M.-% bis 5 M.-%, insbesondere 3,5 M.-% aufweist.

In einer geeigneten Weiterbildung ist das Feststoffmaterial ein Gesteinsmaterial, insbesondere eine Gesteinskörnung. Alternativ oder zusätzlich kann vorgesehen sein, dass das Feststoffmaterial eine Sieblinie aufweist und bevorzugt Korngrößen aus zumindest zwei der Bereiche 0 mm bis 2 mm, 2 mm bis 5 mm, 5 mm bis 8 mm und 8 mm bis 16 mm aufweist. Alternativ oder zusätzlich kann vorgesehen sein, dass ein Füller, bevorzugt als Gesteinsmehl verwendet wird.

In diesem Zusammenhang kann vorgesehen sein, dass der Füller zusammen mit dem Feststoffmaterial in dem System bzw. der Verpackungseinheit gelagert ist. Alternativ kann aber auch vorgesehen sein, dass der Füller in einer gesonderten Verpackung getrennt sowohl vom Feststoffmaterial als auch vom Bindemittel in dem System bzw. in der Verpackungseinheit angeordnet ist. Dann wird ein Stauben weitgehend verhindert. Außerdem kann vorgesehen sein, dass der Füller zusammen mit dem Bindemittel in dem System bzw. in der Verpackungseinheit verpackt, beispielsweise vermischt ist.

Vorteilhaft kann das Feststoffmaterial auch andere Bestandteile außer Gesteinsmaterial aufweisen, beispielsweise Fasern, Gummigranulate oder Glasfaserstäbe, welche je nach Bedarf eingesetzt werden, um die Eigenschaften des Heißasphalts gezielt zu verändern.

Besonders vorteilhaft ist es, wenn das Feststoffmaterial mit Bitumen vorummantelt ist, wobei die Vorummantelung so eingestellt ist, dass ein Verkleben des Feststoffmaterials untereinander verhindert ist, wobei bevorzugt vorgesehen ist, dass das vorummantelte Feststoffmaterial 98 M.-% bis 99,5 M.-% Feststoffmaterial umfasst und 0,5 M.-% bis 2 M.-% Bitumen, insbesondere 98,9 M.-% Feststoffmaterial und 1,1 M.-% Bitumen. Da durch das Erhitzen das Gestein von Wasser und Restfeuchte befreit ist, kann sich der Bitumenfilm restlos mit der Gesteinsoberfläche verbinden. Würde dagegen das Gestein in seiner Anlieferungsform aus dem Steinbruch Verwendung finden, kann es Restfeuchte beinhalten, was zum sogenannten Slow-Setting-Effekt führen würde (eine aufgrund von Feuchtigkeitsrückständen unzureichende Verbindung zwischen Gesteinsoberfläche und Bindemittelfilm). Vor der Vorummantelung wurde das Feststoffmaterial also bevorzugt so erhitzt, dass Wasser und Restfeuchte entfernt sind - das Feststoffmaterial ist dann also wasser- und restfeuchtefrei und mit Bitumen vorummantelt.

In einer bevorzugten Ausgestaltung weist das System bzw. die Verpackungseinheit Feststoffmaterial mit einem Gewichtsanteil von 90 M.-% bis 95 M.-%, bevorzugt 92,3 M.-% bis 93,5 M.-%, insbesondere 92,9 M.-%, Bitumen mit einem Gewichtsanteil von 4 M.-% bis 10 M.-%, bevorzugt, 6 M.-% bis 7,8 M.-%, insbesondere 6,89 M.-% und zumindest ein Additiv mit einen Gewichtsanteil von 0,02 M.-% bis 0,5 M.-%, bevorzugt, 0,1 M.-% bis 0,3 M.-%, insbesondere 0,21 M.-% auf. Dann lassen sich optimale Eigenschaften des Heißasphalts einstellen.

In diesem Zusammenhang ist es bevorzugt, wenn ein etwaig verwendeter Füller massemäßig mit zum Feststoffmaterial gezählt wird, auch wenn er getrennt vorliegen sollte.

Unabhängiger Schutz wird beansprucht für das erfindungsgemäße Verfahren zur Herstellung eines Heißasphalts unter Verwendung eines Feststoffmaterials und eines Bindemittels, das sich dadurch auszeichnet, dass das erfindungsgemäße System bzw. die erfindungsgemäße Verpackungseinheit mit darin separat angeordneten Einzelprodukten hinsichtlich des Feststoffmaterials und des Bindemittels verwendet wird.

Besonders bevorzugt ist dabei vorgesehen, dass der gesamte Inhalt der Verpackungseinheit (Feststoffmaterial und umhülltes Bindemittel) bei Temperaturen zwischen 140 °C und 240 °C erhitzt und zu einer homogenen Asphaltmasse aufgeschmolzen wird. Dadurch wird das Hüllmaterial mit verarbeitet und es muss keine gesonderte Entsorgung stattfinden. Außerdem ist der Arbeitsablauf insgesamt vereinfacht.

Zweckmäßiger Weise wird der Heißasphalt am Ort seiner Verwendung aus dem System bzw. der Verpackungseinheit in sogenannten Asphaltkochern, die sowohl zu mieten sind als auch alle größeren Kommunen im Bestand haben, durch Aufschmelzen hergestellt. Dadurch wird das Verfahren zusätzlich vereinfacht.

Die Merkmale der vorliegenden Erfindung und weitere Vorteile werden anhand der nachfolgenden Beschreibung zweier bevorzugter Ausführungsbeispiele im Zusammenhang mit den Figuren deutlich werden. Dabei zeigen rein schematisch:
- Fig. 1: eine erste bevorzugte Ausgestaltung der erfindungsgemäßen Verpackungseinheit im Schnitt und
- Fig. 2: eine zweite bevorzugte Ausgestaltung der erfindungsgemäßen Verpackungseinheit.

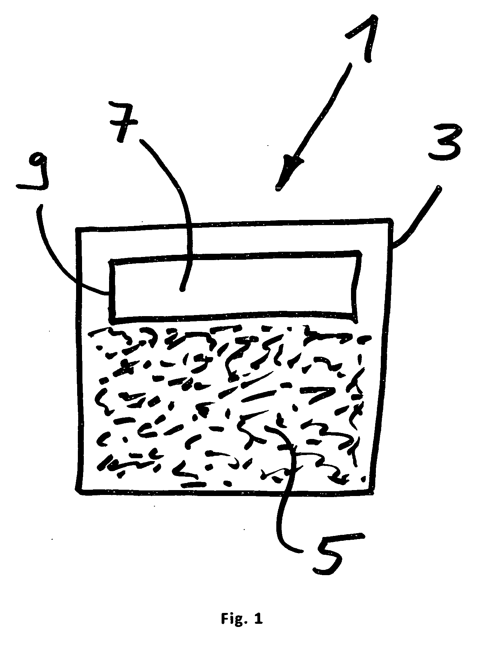

Fig. 1 zeigt rein schematisch im Schnitt die erfindungsgemäße Verpackungseinheit 1, die einen Behälter 3 aufweist, in dem ein Feststoffmaterial 5 und ein separat, ggf. zur Beschleunigung des Aufschmelzens auch in viele Einzelstücke (nicht gezeigt), verpacktes Bindemittel 7 angeordnet sind, wobei als Verpackung 9 ein Kunststoffbeutel aus Polyethylen dient, in den das Bindemittel 7 eingeschweißt ist. Das verpackte Bindemittel 7 liegt somit als ein oder mehrere Bindemittelblöcke vor.

Zur Herstellung des Feststoffmaterials 5 kommt bspw. ein Gesteinskörnungsgemisch zum Einsatz mit Diabas 2/5 GC 90/10 aus Huneberg (Materialnummer 06110019) und Diabas 0/2 GF 85 aus Huneberg (Materialnummer 06111019). Weiterhin wird ein Kalksteinmehl 0/0.063 aus Hehlen (Materialnummer 40114057) als Füller eingesetzt. Die verwendete Kornzusammensetzung der Gesteinskörnungen ist in Tabelle 1 in M.-% (Gewichtsprozent) nach TL Gestein-StB 04, Fassung 2007 angegeben.

**Tabelle 1:**

| Prüfsiebe mm | 1 | 2 | 3 |
|---|---|---|---|
| 31.5 - 45.0 | | | |
| 22.4 - 31.5 | | | |
| 16.0 - 22.4 | | | |
| 11.2 - 16.0 | | | |
| 8.0 - 11.2 | 0.2 | | |
| 5.6 - 8.0 | 4.8 | | |
| 4.0 - 5.6 | 31.2 | | |
| 2.8 - 4.0 | 31.6 | 1.1 | |
| 2.0 - 2.8 | 23.7 | 7.5 | |
| 1.0 - 2.0 | 6.7 | 28.0 | 2.5 |
| 0.125 - 1.0 | 1.1 | 47.6 | 11.1 |
| 0.063 - 0.125 | 0.1 | 5.5 | 7.1 |
| 0.0 - 0.063 | 0.6 | 10.3 | 79.3 |
| | 100.0 | 100.0 | 100.0 |

Dabei setzt sich das Gesteinskörnungsgemisch aus 76,0 M.-% Diabas 2/5 GC 90/10, 11,0 M.-% Diabas 0/2 GF 85 und 13,0 M.-% Kalksteinmehl 0/0.063 Füller zusammen.

Die entsprechende Korngrößenverteilung ist in Tabelle 2 angegeben.

**Tabelle 2:**

| Prüfsiebe mm | Rückstand | Durchgang | Anteile M.-% | Grenzwerte |
|---|---|---|---|---|
| 31.5 - 45.0 | | | | |
| 22.4 - 31.5 | | | | |
| 16.0 - 22.4 | | | | |
| 11.2- 16.0 | | | | |
| 8.0 - 11.2 | | | | |
| 5.6 - 8.0 | 3.8 | 100.0 | 100.0 | ≤ 10.0 |
| 2.0 - 5.6 | 66.7 | 96.2 | 96.2 | 90.0 - 100.0 |
| 0.125 - 2.0 | 16.0 | 29.5 | 29.5 | 15.0 - 30.0 |
| 0.063 - 0.125 | 1.6 | 13.5 | | |
| 0.0 - 0.063 | 11.9 | 11.9 | 11.9 | 5.0 - 12.0 |

Dabei werden 98,9 M.-% des Gesteinskörnungsgemisches bei Temperaturen von ca. 180°C über einen Zeitraum von ca. 1 bis 2 Minuten erhitzt, um Wasser und Feuchte auszutreiben. Dieses Gesteinskörnungsgemisch wird mit 1,1 M.-% Bitumen 25/55-55 gemischt, um das Gesteinskörnungsgemisch mit Bitumen zu ummanteln und dadurch das Feststoffmaterial 5 zu bilden.

Das in der Verpackungseinheit 1 bereit gestellte Bindemittel 7 besteht aus dem kommerziell erhältlichen Bitumen 25/55-55 der BVH Bitumen-Vertrieb und Handel GmbH und einem wachshaltigen Additiv beispielsweise der Sasol Wax GmbH. (Alternativ oder zusätzlich können auch andere Additive, wie Haftverbesserer oder Verarbeitungsverbesserer, wie aspha-min^{®} eingesetzt werden.) Dieses Additiv weist Fettsäureamide auf, die niedermolekulare Esterkomponenten sind und ein teilweise synthetisches Wachs mit Molekulargrößen > C 45 bei einem Schmelzpunkt > 70 °C bilden. Durch dieses Additiv wird der Einbau des Gesteins in den Bitumen wesentlich erleichtert. Dabei werden im Bitumen kurze bewegliche Ketten mit sauren, basischen und neutralen Funktionen bereitgestellt für eine verbesserte Wechselwirkung mit dem Gestein, lange Ketten für die Verbesserung der Bitumenverträglichkeit und kristalline Anteile für die Erhöhung des Erweichungspunktes. Ein solchermaßen modifiziertes Bitumen hat sich inzwischen bei zahlreichen Einsätzen bewährt und die überlegenen Eigenschaften des damit hergestellten Heißasphaltes belegt.

Das Bitumen wird nun als Bindemittel 7 der Verpackungseinheit 1 dadurch hergestellt, dass zu 96,5 M.-% Bitumen 25/55-55 3,5 M.-% wachshaltiges Additiv zugegeben werden.

Anschließend werden in eine Verpackungseinheit 93,93 M.-% des ummantelten Gesteinskörnungsgemisches als Feststoffmaterial 5 gegeben und 6,07 M.-% des eingeschweißten Bindemittels 7, wodurch das Feststoffmaterial 5 nicht mit dem Bindemittel 7 in Kontakt kommen kann. Sowohl das eingeschweißte Bindemittel 7 als auch das Feststoffmaterial 5 sind in dem Behälter 3 angeordnet, wodurch die Verpackungseinheit 1 gelagert und transportiert werden kann. Der Behälter 3 ist dabei bevorzugt aus einem gegenüber Bitumen bzw. dem wachshaltigen Additiv inertem Metall- oder Kunststoffmaterial hergestellt.

Die solchermaßen hergestellte Verpackungseinheit 1 weist somit 92,9 M.-% Gesteinskörnungsgemisch, 6,89 M.-% Bitumen 25/55-55 und 2,1 M.-% wachshaltiges Additiv auf.

Diese Verpackungseinheit 1 kann nun beliebig skaliert werden, wobei geeignete Verpackungsgrößen bei einem Gesamtgewicht von 10 Kilogramm beginnen und Verpackungsgrößen bis 5 Tonnen ohne weiteres möglich sind. Falls größere Mengen oder auch Zwischenmengen benötigt werden, dann können im Anwendungsfall jeweils mehrere Verpackungseinheiten 1 gleichzeitig an den Verwendungsort angeliefert und dort verarbeitet werden.

Im Anwendungsfall, beispielsweise bei Schlaglochreparaturen (nicht gezeigt) werden in Abhängigkeit von der Größe der auszubessernden Schlaglöcher also eine entsprechende Verpackungseinheit 1 bzw. mehrere Verpackungseinheiten 1 verwendet.

Dabei wird die Verpackungseinheit 1 bodenseitig geöffnet und der Inhalt, bestehend aus Feststoffmaterial 5, das im Wesentlichen lose und nicht verklebt aufgrund der nur dünnen Bitumenummantelung vorliegt, zusammen mit den Bitumenblöcken entleert. Durch die Vorummantelung des Feststoffmaterials 5 wird erreicht, dass das Gesteinskörnungsgemisch im Wesentlichen wasserfrei vorliegt, wodurch insgesamt eine bessere Anhaftung des Bindemittels 7 an dem Gesteinskörnungsgemisch erreicht wird. Dieses heterogene Gemisch fällt in einen auf Temperaturen zwischen 140 und 180 °C aufgeheizten fahrbaren Asphaltkocher (nicht gezeigt), indem es über eine Zeitlang aufgeschmolzen und durch ein innen liegendes Rührwerk zu einer homogenen Asphaltmasse verarbeitet wird. Die Verpackung 9 kann hierbei ohne weiteres mit eingeschmolzen werden, da sie die Eigenschaften des Bindemittels 7 bzw. des insgesamt hergestellten Heißasphaltes nicht verändert.

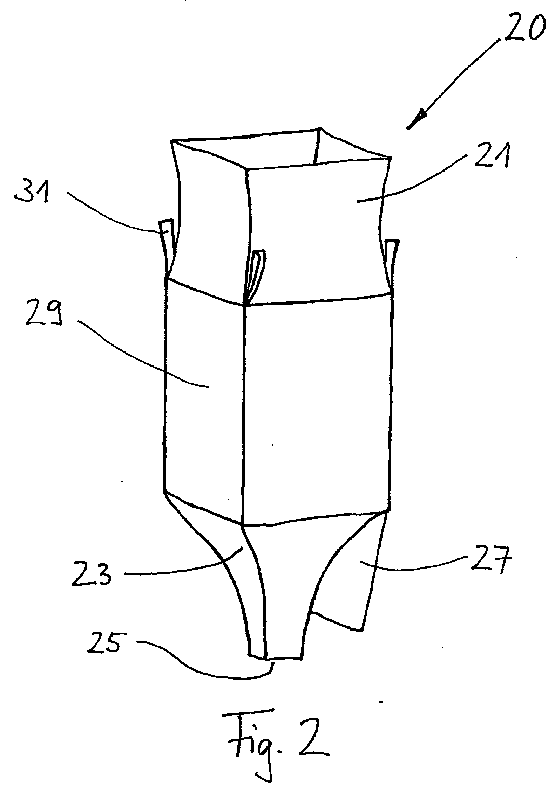

In Fig. 2 ist eine zweite bevorzugte Ausgestaltung der erfindungsgemäßen Verpackungseinheit 20 rein schematisch gezeigt, wobei die selben Elemente mit denselben Bezugszeichen versehen sind, wie in Fig. 1.

Es ist zu erkennen, dass diese Verpackungseinheit 20 eine beispielsweise mit einem Strick (nicht gezeigt) verschließbare Einfüllschürze 21 und einen konusartigen Boden 23 mit einem öffenbaren Verschluss 25, der beispielsweise mit einem Strick (nicht gezeigt) verschlossen werden kann, aufweist. Dadurch wird die Entleerung der Verpackungseinheit 20 wesentlich erleichtert, da zum einen die Öffnung der Verpackungseinheit 20 am Boden sehr einfach durch Aufklappen eines Deckels 27 erfolgen kann, während bei der in Fig. 1 gezeigten Verpackungseinheit 1 ein Aufschneiden mit einem Messer oder dgl. erfolgen muss. Zum anderen wird durch den konusartigen Boden 23 die vollständige Entleerung der Verpackungseinheit 20 in den Asphaltkocher (nicht gezeigt) ermöglicht. Ein solcher Behälter 29 der Verpackungseinheit 20 ist beispielsweise bei der Flexibox Container GmbH, Waidmannsau 14, D-97084 Würzburg erhältlich und weist Tragfähigkeiten SWL 1.000kg, 1.250kg, 1.500kg und 2.000kg auf. Als Material dient ein Polypropylen-Bändchengewebe, wobei ein Polyethylenfutter verwendet wird und Kantgurtschlaufen 31 vorgesehen sind.

Der nach ausreichendem Durchmischen solchermaßen hergestellte Heißasphalt kann nun ohne weiteres direkt eingesetzt werden. Im Gegensatz zu Kaltasphalten wird damit eine wesentlich höhere Lebensdauer des reparierten Schlagloches erzielt und zudem lassen sich durch die Bereitstellung des Heißasphaltes als in Verpackungseinheiten 1 geliefertes Halbfabrikat kleinere Verpackungsgrößen verwenden, so dass das Verfahren sehr wirtschaftlich ist.

Damit lassen sich somit die Vorteile des Heißasphaltes bei der Langlebigkeit und Verschleißfestigkeit und die Vorteile des Kaltasphaltes bei der kurzfristigen und größenangepassten Bereitstellung kombinieren, so dass auch für kleine Anwendungsfälle und unabhängig von großen Produktionsstandorten Asphalt mit ausgezeichneten Eigenschaften kostengünstig bereitgestellt werden kann.

Auch wenn die vorliegende Erfindung vor allem im Zusammenhang mit Schlaglochreparturen erläutert wurde, ist dennoch klar, dass die vorliegende Erfindung nicht darauf beschränkt ist, sondern sie in allen Anwendungsfeldern für Asphalte eingesetzt werden kann und soll. Zum Beispiel gerade dort, wo die Verfügbarkeit von Heißasphalt aus technologischen Gründen nicht gegeben ist, insbesondere an Wochenenden, Feiertagen und bei Bedarf in der Nacht, wo beispielsweise hauptsächlich im Bahnschrankenbereich gearbeitet wird.

Soweit nichts anders angegeben ist, können sämtliche Merkmale der vorliegenden Erfindung frei miteinander kombiniert werden. Auch einzelne in der Figurenbeschreibung beschriebenen Merkmale können, soweit nichts anderes angegeben ist, als Merkmale der Erfindung frei mit den übrigen Merkmalen kombiniert werden. Soweit nichts anderes angegeben ist, können die Merkmale des erfindungsgemäßen System bzw. der Verpackungseinheit auch als Merkmale des erfindungsgemäßen Verfahrens verwendet werden und umgekehrt.

## Patentansprüche

1. Verpackungseinheit (1; 20) zur Herstellung von Heißasphalt, umfassend ein Feststoffmaterial (5) und ein Bindemittel (7), **dadurch gekennzeichnet, dass** zwischen Bindemittel (7) und Feststoffmaterial (5) eine Trennung. unter Verwendung eines Trennmaterials vorliegt

2. Verpackungseinheit (1; 20) nach Anspruch 1, **dadurch gekennzeichnet, dass** das Bindemittel (7) eine Bitumenbasis aufweist und/oder dass das Bindemittel (7) in einer Kunststoffhülle (9) eingeschweißt ist, wobei die Kunststoffhülle (9) bevorzugt Polyethylen umfasst.

3. Verpackungseinheit (1; 20) nach Anspruch 1 oder 2, **dadurch gekennzeichnet, dass** das Bindemittel (7) Additive enthält, die bevorzugt zur Haftverbesserung und/oder zur Einbauerleichterung vorgesehen sind, wobei die Additive insbesondere aus der Gruppe Haftverbesserer und Wachse ausgewählt sind.

4. Verpackungseinheit (1; 20) nach einem der vorherigen Ansprüche, **dadurch gekennzeichnet, dass** das Bindemittel (7) ein Bitumen und zumindest ein Additiv aufweist, wobei das Bitumen einen Gewichtsanteil von vorzugsweise 93,5 M.-% bis 99,5 M.-%, bevorzugt 95 M.-% bis 98 M.-%, insbesondere 96,5 M.-% aufweist und das Additiv einen Gewichtsanteil von vorzugsweise 0,5 M.-% bis 6,5 M.-%, bevorzugt, 2 M.-% bis 5 M.-%, insbesondere 3,5 M.-% aufweist.

5. Verpackungseinheit (1; 20) nach einem der vorherigen Ansprüche, **dadurch gekennzeichnet, dass** das Feststoffmaterial (5) ein Gesteinsmaterial, insbesondere eine Gesteinskörnung ist und/oder dass das Feststoffmaterial (5) eine Sieblinie aufweist und bevorzugt Korngrößen aus zumindest zwei der Bereiche 0 mm bis 2 mm, 2 mm bis 5 mm, 5 mm bis 8 mm und 8 mm bis 16 mm aufweist und/oder dass neben dem Feststoffmaterial ein Füller vorhanden ist, der bevorzugt Gesteinsmehl aufweist.

6. Verpackungseinheit (1; 20) nach einem der vorherigen Ansprüche, **dadurch gekennzeichnet, dass** das Feststoffmaterial (5) mit Bitumen vorummantelt ist, wobei die Vorummantelung so eingestellt ist, dass ein Verkleben des Feststoffmaterials (5) untereinander verhindert ist, wobei bevorzugt vorgesehen ist, dass das vorummantelte Feststoffmaterial (5) 98 M.-% bis 99,5 M.-% Feststoffmaterial umfasst und 0,5 M.-% bis 2 M.-% Bitumen, insbesondere 98,9 M.-% Feststoffmaterial und 1,1 M.-% Bitumen.

7. Verpackungseinheit (1; 20) nach einem der vorherigen Ansprüche, **dadurch gekennzeichnet, dass** die Verpackungseinheit (1; 20) Feststoffmaterial (5) mit einem Gewichtsanteil von 90 M.-% bis 95 M.-%, bevorzugt 92,3 M.-% bis 93,5 M.-%, insbesondere 92,9 M.-%, Bitumen mit einem Gewichtsanteil von 4 M.-% bis 10 M.-%, bevorzugt, 6 M.-% bis 7,8 M.-%, insbesondere 6,89 M.-% und zumindest ein Additiv mit einen Gewichtsanteil von 0,02 M.-% bis 0,5 M.-%, bevorzugt, 0,1 M.-% bis 0,3 M.-%, insbesondere 0,21 M.-% aufweist.

8. Verpackungseinheit (1; 20) nach einem der vorherigen Ansprüche, **dadurch gekennzeichnet, dass** das Bindemittel (7) in zumindest einer das Bindemittel (7) von dem Feststoffmaterial (5) trennenden Hülle (9) angeordnet ist.

9. Verpackungseinheit (1; 20) nach einem der vorherigen Ansprüche, **dadurch gekennzeichnet, dass** die Verpackungseinheit (1) Feststoffmaterial (5) und Bindemittel (7) in solchen Gewichtsmengen aufweist, dass Heißasphalt einer vorbestimmten Zusammensetzung hergestellt werden kann.

10. Verfahren zur Herstellung eines Heißasphalts unter Verwendung eines Feststoffmaterials (5) und eines Bindemittels (7), **dadurch gekennzeichnet, dass** die Verpackungseinheit (1; 20) nach einem der vorherigen Ansprüche verwendet wird, wobei bevorzugt vorgesehen ist, dass das Bindemittel (7) und das Feststoffmaterial (5) bei Temperaturen zwischen 120 °C bis 240 °C erhitzt und dadurch zu einer homogenen Asphaltmasse aufgeschmolzen werden.

11. Verfahren nach Anspruch 10, **dadurch gekennzeichnet, dass** zur Vorummantelung des Feststoffmaterials (5) das Feststoffmaterial erhitzt wird, um Wasser zu entfernen, und anschließend ein Bindemittel zugegeben wird.

12. Verfahren nach Anspruch 10 oder 11, **dadurch gekennzeichnet, dass** der Heißasphalt am Ort seiner Verwendung hergestellt wird.

13. Verfahren nach einem der Ansprüche 10 bis 12, **dadurch gekennzeichnet, dass** das Bindemittel (7) und das Feststoffmaterial (5) bei Temperaturen zwischen 120 °C bis 240 °C erhitzt und dadurch zu einer homogenen Asphaltmasse aufgeschmolzen werden.

## Claims

1. A packaging unit (1; 20) for producing hot asphalt, comprising a solid material (5) and a binder (7), **characterized in that** the binder (7) and the solid material (5) are separated from each other by a separating material.

2. The packaging unit (1; 20) according to claim 1, **characterized in that** the binder (7) is bitumen based and/or that the binder (7) is welded into a plastic shell (9), wherein the plastic shell (9) advantageously includes polyethylene.

3. The packaging unit (1; 20) according to claim 1 or 2, **characterized in that** the binder (7) includes additives which are advantageously provided for improving adhesion and/or facilitating installation, wherein the additives are in particular selected from the group including adhesion improving agents and waxes.

4. The packaging unit (1; 20) according to one of the preceding claims, **characterized in that** the binder (7) includes bitumen and at least one additive, wherein the bitumen is advantageously included at 93.5% to 99.5% of total weight, advantageously at 95% of total weight to 98% of total weight, in particular at 96.5% of total weight and the additive is advantageously included at 0.5% to 6.5% of total weight, advantageously at 2% to 5% of total weight, in particular at 3.5% of total weight.

5. The packaging unit (1; 20) according to one of the preceding claims, **characterized in that** the solid material (5) is a rock material, in particular a gravel material and/or that the solid material (5) has a sieve line and advantageously includes grit sizes from at least two of the ranges 0 mm to 2 mm, 2 mm to 5 mm, 5 mm to 8 mm and 8 mm to 16 mm, and/or that a filler is included in addition to the solid material, wherein the filler advantageously includes pulverized rock material.

6. The packaging unit (1; 20) according to one of the preceding claims, **characterized in that** rock material (5) is pre-encased with the bitumen, wherein the pre-encasement is provided so that the solid material (5) is prevented from sticking together, wherein it is advantageously provided that the pre-encased solid material (5) includes 98% by weight to 99.5% by weight solid material and 0.5% by weight to 2% by weight bitumen material, in particular 98.9% by weight solid material and 1.1 % by weight bitumen material.

7. The packaging unit (1; 20) according to one of the preceding claims, **characterized in that** the packaging unit (1; 20) includes solid material (5) at 90% by weight to 95% by weight, advantageously 92.3% by weight to 93.5% by weight, in particular 92.9% by weight and bitumen at 4% by weight to 10% by weight, advantageously at 6% by weight to 7.8% by weight, in particular at 6.89% by weight and at least one additive at 0.02% by weight to 0.5% by weight, advantageously at 0.1% by weight to 0.3% by weight, in particular at 0.21% by weight.

8. The packaging unit (1; 20) according to one of the preceding claims, **characterized in that** the binder (7) is arranged at least in one shell (9) separating the binder (7) from the solid material (5).

9. The packaging unit (1; 20) according to one of the preceding claims, **characterized in that** the packaging unit (1) includes the solid material (5) and the binder (7) in percentages by weight so that hot asphalt with a predetermined composition is producible.

10. A method for producing hot asphalt using a solid material (5) and a binder (7), **characterized in that** the packaging unit (1; 20) according to one of the preceding claims in used, wherein it is advantageously provided that the binder (7) and the solid material (5) is heated to a temperature between 120 °C and 240 °C and thus melted to form a homogenous asphalt mass.

11. The method according to claim 10, **characterized in that** the solid material (5) is heated for pre encasing the solid material in order to remove water and a binder is subsequently added.

12. The method according to claim 10 or 11, **characterized in that** the hot asphalt is produced where it is used.

13. The method according to claims 10 through 12, **characterized in that** the binder (7) and the solid material (5) are heated to a temperature between 120 °C and 240 °C and thus melted to form a homogeneous asphalt mass.

## Revendications

1. Unité d'emballage (1 ; 20) destinée à la production d'asphalte chaud, comprenant une matière solide (5) et un liant (7), **caractérisée en ce qu'**une séparation est réalisée entre le liant (7) et la matière solide (5) au moyen d'une matière de séparation.

2. Unité d'emballage (1 ; 20) selon la revendication 1, **caractérisée en ce que** le liant (7) comporte une base de bitume et/ou **en ce que** le liant (7) est soudée dans une enveloppe de matière plastique (9), l'enveloppe de matière plastique (9) comportant de préférence du polyéthylène.

3. Unité d'emballage (1 ; 20) selon la revendication 1 ou 2, **caractérisée en ce que** le liant (7) contient des additifs qui sont de préférence destinés à améliorer l'adhérence et/ou faciliter le montage, les additifs étant choisis en particulier dans le groupe comportant des agents améliorant l'adhérence et des cires.

4. Unité d'emballage (1 ; 20) selon l'une des revendications précédentes, **caractérisée en ce que** le liant (7) comporte un bitume et au moins un additif, le bitume étant dans un pourcentage en poids de préférence de 93,5% à 99,5%, de préférence de 95% à 98%, en particulier de 96,5%, et l'additif étant dans un pourcentage en poids de préférence de 0,5 à 6,5%, de préférence de 2% à 5%, en particulier de 3,5%.

5. Unité d'emballage (1 ; 20) selon l'une des revendications précédentes, **caractérisée en ce que** la matière solide (5) est une matière rocheuse, en particulier, un granulat de matière rocheuse et/ou **en ce que** la matière solide (5) a une courbe granulométrique et de préférence des tailles de grains dans au moins deux des gammes allant de 0 à 2 mm, de 2 mm à 5 mm, de 5 mm à 8 mm et de 8 mm à 16 mm et/ou **en ce qu'**elle contient, en plus de la matière solide, une charge qui comporte de préférence de la poudre de matière rocheuse.

6. Unité d'emballage (1 ; 20) selon l'une des revendications précédentes, **caractérisée en ce que** la matière solide (5) est pré-enrobée de bitume, le pré-enrobage étant ajusté de façon à empêcher l'agglutination de la matière solide (5), de préférence la matière solide (5) pré-enrobée comportant 98% à 99,5% en poids de matière solide et 0,5 à 2% en poids de bitume, en particulier 98,9% en poids de matière solide et 1,1% en poids de bitume.

7. Unité d'emballage {1 ; 20) selon l'une des revendications précédentes, **caractérisée en ce que** l'unité d'emballage (1 ; 20) comporte de la matière solide (5) dans un pourcentage en poids de 90% à 95%, de préférence de 92,3% à 93,5%, en particulier de 92,9%, du bitume dans un pourcentage en poids de 4% à 10%, de préférence de 6% à 7,8%, en particulier de 6,89% et au moins un additif dans un pourcentage en poids de 0,02% à 0,5%, de préférence de 0,1% à 0,3%, en particulier de 0,21%.

8. Unité d'emballage (1; 20) selon l'une des revendications précédentes, **caractérisée en ce que** le liant (7) est disposé dans au moins une enveloppe (9) séparant le liant (7) de la matière solide (5).

9. Unité d'emballage (1 ; 20) selon l'une des revendications précédentes, **caractérisée en ce que** l'unité d'emballage (1) comporte une matière solide (5) et un liant (7) dans des quantités en poids permettant de produire de l'asphalte chaud d'une composition prédéterminée.

10. Procédé de production d'un asphalte chaud à l'aide d'une matière solide (5) et d'un liant (7), **caractérisé en ce que** l'on utilise l'unité d'emballage (1 ; 20) selon l'une des revendications précédentes, de préférence le liant (7) et la matière solide (5) étant chauffés et ainsi fondus à des températures comprises entre 120°C et 240°C pour former une composition d'asphalte homogène.

11. Procédé selon la revendication 10, **caractérisé en ce que**, pour réaliser le pré-enrobage de la matière solide (5), on chauffe la matière solide pour éliminer l'eau puis on ajoute un liant.

12. Procédé selon la revendication 10 ou 11, **caractérisé en ce que** l'asphalte chaud est produit à l'endroit de son utilisation.

13. Procédé selon l'une des revendications 10 à 12, **caractérisé en ce que** le liant (7) et la matière solide (5) sont chauffés et ainsi fondus à des températures comprises entre 120°C et 240°C pour former une composition d'asphalte homogène.
